# EUROPEAN PATENT APPLICATION

(11) **EP 3 012 748 A1**
(43) Date of publication of application: **27.04.2016**
(21) Application number: 14832339.7
(22) Date of filing: 24.07.2014
(51) Int. Cl.: G06F 17/30

(54) **INFORMATION MANAGEMENT DEVICE, AND INFORMATION MANAGEMENT METHOD**

(30) Priority: 30.07.2013 JP 2013158200
(71) Applicant: Nippon Telegraph and Telephone Corporation, Tokyo 100-8116 (JP)
(72) Inventor: OKANO, Yasushi, Musashino-shi Tokyo 180-8585 (JP); ORIHARA, Shingo, Musashino-shi Tokyo 180-8585 (JP); SATO, Tohru, Musashino-shi Tokyo 180-8585 (JP); ASAKURA, Hiroshi, Musashino-shi Tokyo 180-8585 (JP)
(74) Representative: Hoffmann Eitle
(86) International application number: PCT/JP2014/069571
(87) International publication number: WO 2015/016133

(57) **Abstract**

In an information management device (10), plural sets of document data on a network are collected. Subsequently, in the information management device (10), by use of words included in the respective sets of document data collected, the respective sets of document data are classified into predetermined fields, and tag information corresponding to the fields are respectively added to the sets of document data. In the information management device (10), a specification of a field of document data to be searched is then received. Subsequently, in the information management device (10), document data added with tag information corresponding to the received field are searched.

## Description

### Field

The present invention relates to an information management device and an information management method. Background

As means for searching for document data related to a particular word (keyword) from an unspecified large number of documents on the Internet, various search engines have conventionally been proposed. For example, by receiving an input of a keyword, a search engine searches for document data related to the keyword and outputs the document data.

A technique for automatically extracting only main contents from document data retrieved by a search engine in this manner has been known (see, for example, Patent Literature 1). Further, a technique for classifying plural sets of document data on the Internet subject to search by similarity among their contents has been known (see, for example, Patent Literature 2).

### Citation List

### Patent Literature

Patent Literature 1: Japanese Laid-open Patent Publication No. 2010-117941
Patent Literature 2: Japanese Patent No. 4125951 Summary

### Technical Problem

However, the conventional techniques have had a problem that, if an amount of document data of a genre desired by a user is small as compared to an amount of the overall document data, the document data may not be able to be retrieved appropriately. For example, when a search for articles, like articles related to security, which is by nature not very topical, is attempted, it has been difficult to retrieve similar articles or related articles appropriately.

Therefore, an object of this invention is to appropriately retrieve document data even if an amount of document data of a genre desired by a user is small as compared to an amount of the overall document data. Solution to Problem

An information management device includes: a collecting unit that collects plural sets of document data on a network; an adding unit that classifies the respective sets of document data into predetermined fields by use of words included in the respective sets of document data that have been collected by the collecting unit, and adds tag information corresponding to the fields respectively to the sets of document data; a receiving unit that receives a specification of a field of document data to be searched; and a searching unit that searches for document data added with tag information corresponding to the field received by the receiving unit.

An information management method executed by an information management device, the information management method includes: a collecting step of collecting plural sets of document data on a network; an adding step of classifying the respective sets of document data into predetermined fields by use of words included in the respective sets of document data that have been collected by the collecting step, and adding tag information corresponding to the fields respectively to the sets of document data; a receiving step of receiving a specification of a field of document data to be searched; and a searching step of searching for document data added with tag information corresponding to the field received by the receiving step.

### Advantageous Effects of Invention

An information management device and an information management method disclosed in this application enable appropriate retrieval of document data by, for example, reduction of omission in the search and of mixing of unrelated document data therein, even if an amount of document data of a genre desired by a user is small as compared to an amount of the overall document data.

### Brief Description of Drawings

FIG. 1 is a diagram illustrating an example of a configuration of an information management device according to a first embodiment.
FIG. 2 is a diagram illustrating an example of information stored by a document data storage unit according to the first embodiment.
FIG. 3 is a diagram illustrating a series of processes for adding tags to collected articles and executing a search based on the tags, in the information management device according to the first embodiment.
FIG. 4 is a flow chart illustrating a flow of a tag addition process in the information management device according to the first embodiment.
FIG. 5 is a flow chart illustrating a flow of an information search process in the information management device according to the first embodiment.
FIG. 6 is a diagram illustrating an example of a configuration of an information management device according to a second embodiment.
FIG. 7 is a diagram illustrating an example of information stored by a field by field word list storage unit according to the second embodiment.
FIG. 8 is a diagram illustrating a series of processes for adding, with reference to a field by field word list, tags to articles and executing a search based on the tags, in the information management device according to the second embodiment.
FIG. 9 is a flow chart illustrating a flow of a tag addition process in the information management device according to the second embodiment.
FIG. 10 is a diagram illustrating a series of processes for adding tags to articles and executing a search for an article related to a keyword, in an information management device according to a third embodiment.
FIG. 11 is a flow chart illustrating a flow of an information search process in the information management device according to the third embodiment.
FIG. 12 is a diagram illustrating a computer that executes an information management program.

### Description of Embodiments

Hereinafter, with reference to the appended drawings, embodiments of an information management device and an information management method according to the invention will be described in detail. The invention is not limited by these embodiments.

### [First Embodiment]

In the following embodiment, flows of processes by an information management device and an information management method according to a first embodiment will be described in sequence, and lastly, effects by the first embodiment will be described.

### [Configuration of Information Management Device]

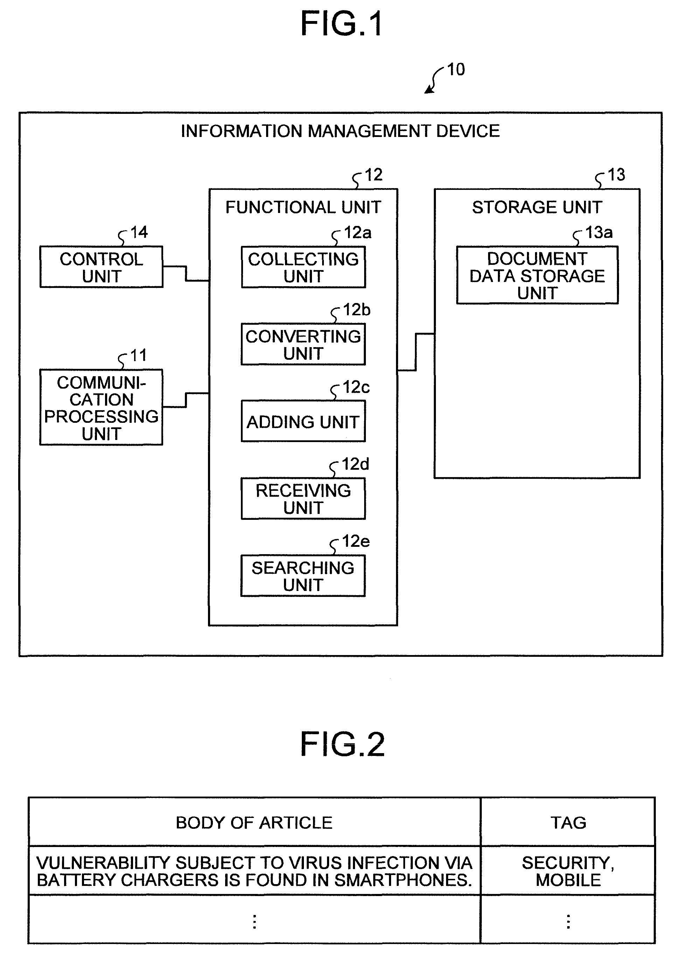

A configuration of an information management device 10 illustrated in FIG. 1 will be described. FIG. 1 is a diagram illustrating the configuration of the information management device 10 according to the first embodiment. As illustrated in FIG. 1, the information management device 10 has a communication processing unit 11, a functional unit 12, a storage unit 13, and a control unit 14. Further, the information management device 10 is connected to the Internet.

The communication processing unit 11 controls communication related to various types of information exchanged with devices on the Internet. For example, the communication processing unit 11 requests document data including an article and the like, to a server on the Internet, and receives the document data.

The storage unit 13 has, as illustrated in FIG. 1, a document data storage unit 13a. The storage unit 13 is, for example: a semiconductor memory element, such as a random access memory (RAM) or a flash memory; a storage device, such as a hard disk or an optical disk; or the like.

The document data storage unit 13a stores therein document data of articles and posts, which have been collected from news sites, bulletin board systems (BBSs), Twitter (registered trademark), and the like on the Internet. Further, the document data storage unit 13a stores therein, in association with the document data, tag information that indicates genres (fields) of the document data. The document data storage unit 13a may use a general database (MySQL, PostgreSQL, or the like), and any kind of accumulation method, for example, storage in a tabular format or a text format, may be adopted.

For example, the document data storage unit 13a stores therein, as exemplified in FIG. 2, "Body of Article" indicating contents of document data, in association with "Tag" indicating genres of bodies of articles. The number of tags for "Tag" may be one, or more than one, for one article. In a specific example, as illustrated in FIG. 2, a body of an article, "Vulnerability subject to virus infection via battery chargers is found in smartphones", and tags, "security, mobile", are stored in association with each other.

Returning to FIG. 1, the functional unit 12 has a collecting unit 12a, a converting unit 12b, an adding unit 12c, a receiving unit 12d, and a searching unit 12e. The functional unit 12 is in charge of respective processes and is practically realized as (one component of) software, or as middleware. Further, the control unit 14 controls operation of the communication processing unit 11, the functional unit 12, and the storage unit 13, governs operation of the information management device 10, and is practically realized by an integrated circuit or the like, such as a central processing unit (CPU) or a micro processing unit (MPU).

The collecting unit 12a collects plural sets of document data on the Internet. For example, the collecting unit 12a collects articles from news sites, BBSs, Twitter, and the like on the Internet. As for the news sites and BBSs, based on a list of collection destinations determined by a user in advance, the collecting unit 12a accesses the sites and collects the articles.

Further, as for Twitter, the collecting unit 12a uses, for example, a streaming API or a search API to obtain a portion from all of the tweets, or obtains, based on a keyword determined in advance by a user or on a Twitter user ID, tweets corresponding to a condition.

Furthermore, the collecting unit 12a formats the collected articles so that the collected articles are able to be utilized for analysis. Specifically, as to the news and BBSs, unnecessary HTML tags and scripts, or advertisements unrelated to the articles are removed.

The converting unit 12b coverts, based on words included in each set of document data collected by the collecting unit 12a, the set of document data into a feature vector. Specifically, after removal of unnecessary characters and unification of character types for data of the collected articles, the converting unit 12b executes feature vector conversion for processing the article data with a machine learning engine.

The converting unit 12b executes, as the removal of unnecessary characters, for example, deletion of extra space, URLs hindering language processing, or the like, with respect to the article data. Further, for example, the converting unit 12b executes, as the unification of character types, unification of upper case letters and lower case letters, or of so-called ens and ems, with respect to characters used in the article data.

Further, as to the conversion into feature vectors, the converting unit 12b may use conversion by any of, for example, morphological analysis, n-gram, and a delimiter character. If the conversion by morphological analysis is used, the converting unit 12b divides the article data according to parts of speech, and converts these into a feature vector. In such morphological analysis, for example, a library, such as the open source Mecab, may be used. For example, if the article data are of a sentence,
"Twitter 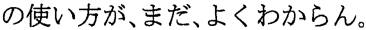 " (= a Japanese sentence meaning, "I still cannot understand the way to use Twitter well.")", the converting unit 12b uses morphological analysis to divide the sentence like,
"Twitter/ 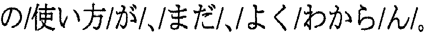 ".

Further, if the conversion by n-gram is used, the converting unit 12b generates sets of n characters while shifting the article data from the head, character by character, and converts them into a feature vector. For example, if the article data are of the sentence,
"Twitter 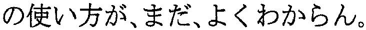 ", the converting unit 12b uses n-gram (n = 3) to divide the sentence like,
"Twi/wit/itt/tte/ter/er 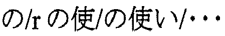 ".

Further, if the conversion by a delimiter character is used, the converting unit 12b divides the article data by a delimiter character (a space or a comma, ",", or the like) specially determined, and converts them into a feature vector. Generally, morphological analysis is often applied to Japanese sentences, and delimiting with spaces is often applied to English. For example, if a comma, "," is specified as a delimiter character in the sentence having the article data,
"Twitter 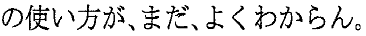 ". the converting unit 12b uses the delimiter character to divide the sentence like,
"Twitter 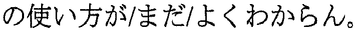 ".

The converting unit 12b then converts the article data, which have been divided into elements as described above, into a feature vector. Examples of a feature vector conversion technique include: a method, in which the number of occurrences of each element is directly regarded as a feature vector; a method, in which whether or not each element occurs is made to correspond to 1 or 0 regardless of the number of occurrences; and a method of executing weighting in consideration of the number of occurrences of the whole sentence. Any method may be used, as long as the method is provided in a machine learning library to be used.

By using words included in the respective sets of document data collected by the collecting unit 12a, the adding unit 12c classifies the respective sets of document data into predetermined fields and add tag information corresponding to the fields respectively to the sets of document data. Specifically, by using the feature vectors converted by the converting unit 12b, the adding unit 12c classifies the respective sets of document data into the predetermined fields and adds the tag information corresponding to the fields respectively to the sets of document data.

For example, the adding unit 12c provides the feature vectors converted by the converting unit 12b to the machine learning engine for classification into categories that have been provided in advance. The categories that have been provided in advance are, for example, fields in which users are interested in, such as "security", "programming", and "mobile". The machine learning engine used may be of any kind, for example, the open source Jubatus, or the like. The adding unit 12c adds tags of the categories classified by the machine learning to the article data and stores the articles with the tags into the document data storage unit 13a.

The receiving unit 12d receives a specification of a field of document data to be searched. Specifically, the receiving unit 12d displays candidates of fields of document data subject to search and receives a specification of a field from the displayed field candidates.

For example, when the receiving unit 12d receives a search instruction to start a search, the receiving unit 12d displays, as the candidates of fields of document data subject to search, for example, words indicating fields, such as "security", "programming", and "mobile", and displays a check box near each of these words. The receiving unit 12d then receives a word having a check mark in the check box, as a field that has been specified. The number of specified fields received by the receiving unit 12d may be one, or more than one.

The searching unit 12e searches for document data added with tag information corresponding to the field received by the receiving unit 12d. For example, if an instruction to search for the field, "security", has been received, the searching unit 12e searches for document data added with the tag, "security", from the document data storage unit 13a. The searching unit 12e then displays the retrieved document data.

If an instruction to search for plural fields has been received, the searching unit 12e may search for document data added with tags corresponding to all of the fields from the document data storage unit 13a or may search for all of document data added with a tag corresponding to any field of the plural fields.

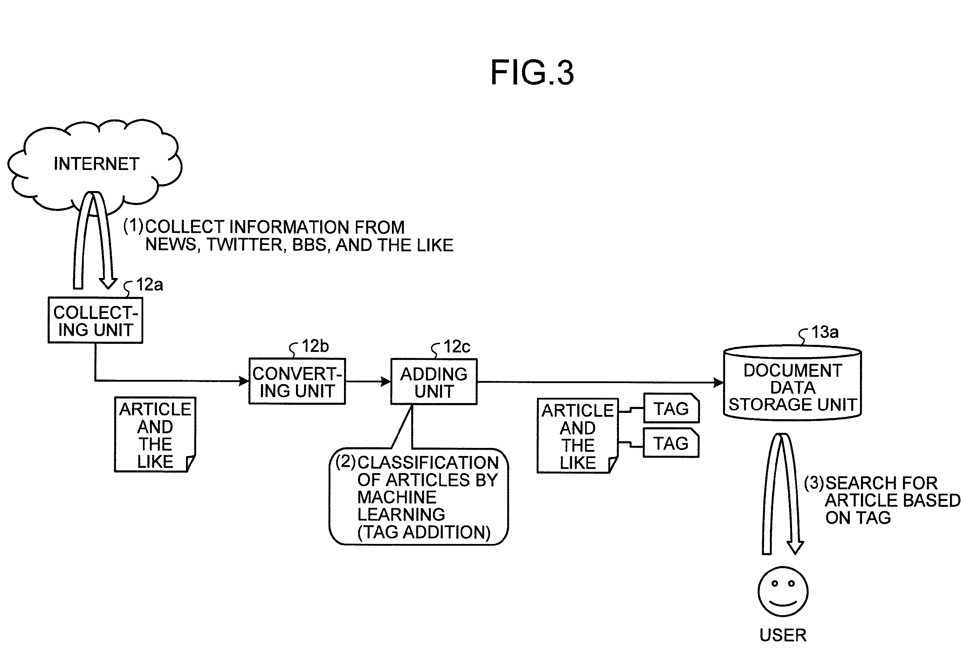

By use of FIG. 3, a series of processes for adding tags to collected articles and executing a search based on the tags will be described. FIG. 3 is a diagram illustrating a series of processes for adding tags to collected articles and executing a search based on the tags, in the information management device according to the first embodiment. As illustrated in FIG. 3, the collecting unit 12a of the information management device 10 collects information, such as articles from news sites, Twitter, BBSs, and the like on the Internet (see (1) in FIG. 3).

The converting unit 12b then coverts the articles into feature vectors, based on words included in the respective articles collected by the collecting unit 12a. Thereafter, the adding unit 12c provides the feature vectors converted by the converting unit 12b to the machine learning engine to classify the feature vectors into categories that have been provided in advance, and adds tags corresponding to the categories, to the articles and the like (see (2) in FIG. 3). The searching unit 12e then searches for document data added with tag information corresponding to a field specified by a user (see (3) in FIG. 3).

### [Process by Information Management Device]

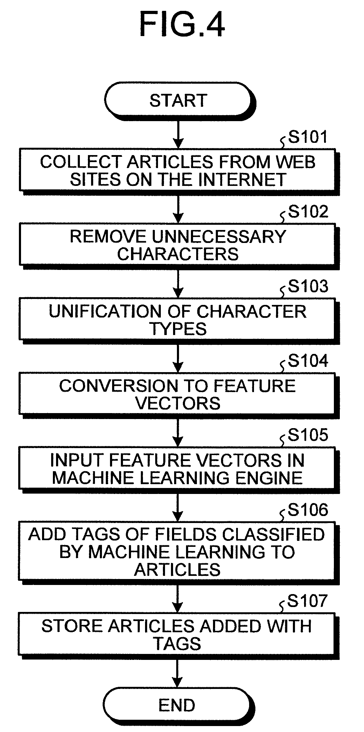

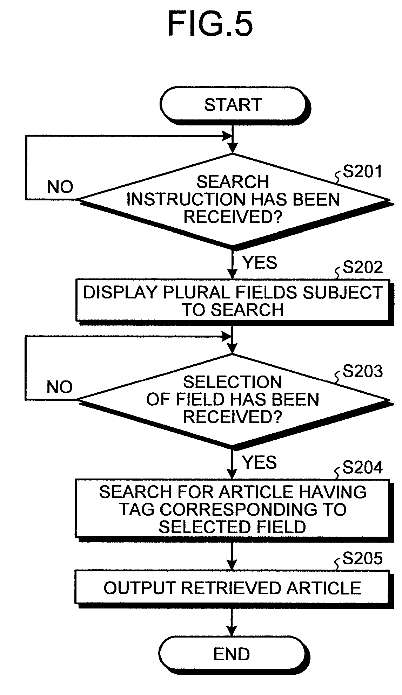

Next, by use of FIGS. 4 and 5, a process by the information management device 10 according to the first embodiment will be described. FIG. 4 is a flow chart illustrating a flow of a tag addition process in the information management device according to the first embodiment. FIG. 5 is a flow chart illustrating a flow of an information search process in the information management device according to the first embodiment.

First, by use of FIG. 4, the flow of the tag addition process in the information management device 10 according to the first embodiment will be described. As illustrated in FIG. 4, the collecting unit 12a of the information management device 10 collects articles from Web sites (news sites, BBSs, Twitter, blogs, and the like) on the Internet (Step S101).

The converting unit 12b then removes unnecessary characters from the collected articles (Step S102). For example, the converting unit 12b performs, as the removal of unnecessary characters, deletion of extra space and URLs and the like hindering language processing, from the article data.

Subsequently, the converting unit 12b executes unification of character types for the collected articles (Step S103). For example, the converting unit 12b executes, as the unification of character types, for characters used in the article data, unification of upper case letters and lower case letters, and of so-called ens and ems.

After removing the unnecessary characters and unifying the character types, for the collected articles, the converting unit 12b executes feature vector conversion for processing with the machine learning engine (Step S104). For example, as to the conversion into feature vectors, the converting unit 12b executes the conversion into feature vectors by dividing the articles by use of any of: morphological analysis; n-gram; and a delimiter character.

Subsequently, the adding unit 12c provides the feature vectors converted by the converting unit 12b to the machine learning engine to classify the feature vectors into categories that have been provided in advance (Step S105). The adding unit 12c then adds tags of the categories classified by the machine learning to the article data (Step S106). Thereafter, the adding unit 12c stores the collected articles and the added categories into the document data storage unit 13a (Step S107).

Next, by use of FIG. 5, a flow of an information search process in the information management device 10 according to the first embodiment will be described. As illustrated in FIG. 5, when the receiving unit 12d of the information management device 10 receives a search instruction to start a search (Step S201: Yes), the receiving unit 12d displays candidates of plural fields, which are probable search targets (Step S202).

For example, when the receiving unit 12d receives a search instruction to start a search, the receiving unit 12d displays, as candidates of fields of document data subject to search, for example, words indicating fields, such as "security", "programming", and "mobile", and displays a check box near each of these words. The receiving unit 12d then receives a word having a check mark in the check box as a field that has been specified. The number of specified fields received by the receiving unit 12d may be one, or more than one.

The receiving unit 12d then determines whether or not a specification of a field from the displayed candidates of fields has been received (Step S203). As a result, if the receiving unit 12d determines that the specification of a field from the displayed candidates of fields has been received (Step S203: Yes), articles having a tag corresponding to the selected field are searched (Step S204). For example, if an instruction to search for the field, "security", has been received, the searching unit 12e searches for document data added with the tag, "security", from the document data storage unit 13a. The searching unit 12e then outputs the retrieved articles (Step S205).

### [Effects of First Embodiment]

As described above, in the information management device 10 according to the first embodiment, plural sets of document data on a network are collected, the respective sets of document data are classified into predetermined fields by use of words included in the respective sets of document data that have been collected, and tag information corresponding to the fields is added respectively to the sets of document data. In the information management device 10, a specification of a field of document data to be searched is received, and document data added with the tag information corresponding to the received field are searched. Even if an amount of document data of a genre desired by a user is small as compared to an amount of the overall document data, the document data are able to be retrieved appropriately.

For example, in the information management device 10, articles are collected from Web sites (news, Twitter, BBSs, blogs, and the like) on the Internet, classification of and tag addition to these articles are executed by machine learning, and the articles and the tags are stored. Since, based on the tags added to the articles, articles desired by a user are able to be retrieved, even if an amount of articles of a genre desired by the user is small as compared to an amount of the overall articles, based on the tag information, the articles desired by the user are able to be found from the many articles.

Further, in the information management device 10, based on words included in the respective collected document data, the document data are converted into feature vectors. Further, in the information management device 10, by use of the converted feature vectors, the respective sets of document data are classified into predetermined fields and the tag information corresponding to the fields are respectively added to the sets of document data. Therefore, tags are able to be added to document data appropriately.

Further, in the information management device 10, candidates of fields of document data subject to search are displayed, and a specification of a field from the displayed candidates of fields is received. Therefore, even if a user does not know a search keyword, for example, a search is able to be executed even for articles related to a new topic.

### [Second Embodiment]

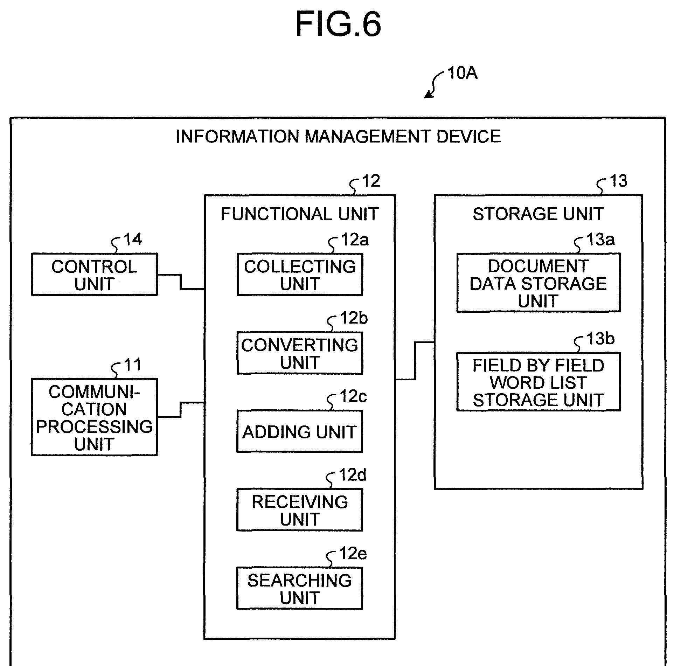

In a second embodiment, an information management device may store a word list related to predetermined fields, refer to the word list, and add tag information corresponding to the fields respectively to sets of document data. Hereinafter, by use of FIG. 6 to FIG. 9, a case will be described, in which a word list related to predetermined fields is stored, words are extracted, with reference to the word list, from each set of document data, and based on the words, the set of document data is converted into a feature vector. Description of any configuration and process common with the first embodiment will be omitted.

First, by use of FIG. 6, a configuration of an information management device 10A according to the second embodiment will be described. FIG. 6 is a diagram illustrating an example of the configuration of the information management device according to the second embodiment. The information management device 10A according to the second embodiment is different from the information management device 10 according to the first embodiment illustrated in FIG. 1 in that the information management device 10A additionally includes a field by field word list storage unit 13b.

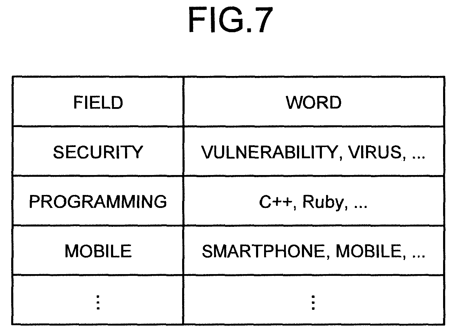

The field by field word list storage unit 13b stores therein a field by field word list related to predetermined fields. For example, the field by field word list storage unit 13b stores therein, as exemplified in FIG. 7, correspondingly with fields, word lists related to the respective fields. In an example of FIG. 7, the field by field word list storage unit 13b stores therein words, "vulnerability, virus, ..." correspondingly with a field, "security". FIG. 7 is a diagram illustrating an example of information stored by the field by field word list storage unit 13b according to the second embodiment. The field by field word list storage unit 13b stores therein words of genres desired by users as a field by field word list.

With reference to the word list stored in the field by field word list storage unit 13b, the converting unit 12b extracts words from each set of document data, and based on the words, converts the set of document data into a feature vector.

For example, after executing removal of unnecessary characters and unification of character types for collected article data, the converting unit 12b extracts, as a field by field word extraction process, based on a field by field word list that has been provided in advance, words included in a list of each field from a body of an article, and converts the words, which are a result of the extraction, into a feature vector.

In a specific example, when a body of an article is "Vulnerability subject to virus infection via battery chargers is found in smartphones" and the converting unit 12b refers to the field by field word list exemplified in FIG. 7 and executes a process of extracting words included in the list from the body of the article, as a result of the extraction, the words, "virus" and "vulnerability", of the field, "security", and the word, "smartphone", of the field, "mobile", will be extracted. The converting unit 12b then converts "virus", "vulnerability", and "smartphone" into a feature vector.

Thereafter, similarly to the first embodiment, the adding unit 12c provides the feature vectors converted by the converting unit 12b to a machine learning engine and the feature vectors are classified into categories that have been provided in advance. With respect to article data, the adding unit 12c then adds a tag to a category classified by the machine learning and stores the article and the tag together into the document data storage unit 13a.

In the above process, the process of the conversion to a feature vector may be omitted and the field corresponding to the extracted words may be added as a tag to the article data. That is, in the above example, if, as a result of the process of extracting the words included in the list from the body of the article, for example, "virus", "vulnerability", and "smartphone" are extracted, the adding unit 12c may add "security" corresponding to virus and vulnerability and "mobile" corresponding to smartphone as tags or may add only "security" corresponding to the words of the largest number of words as a tag.

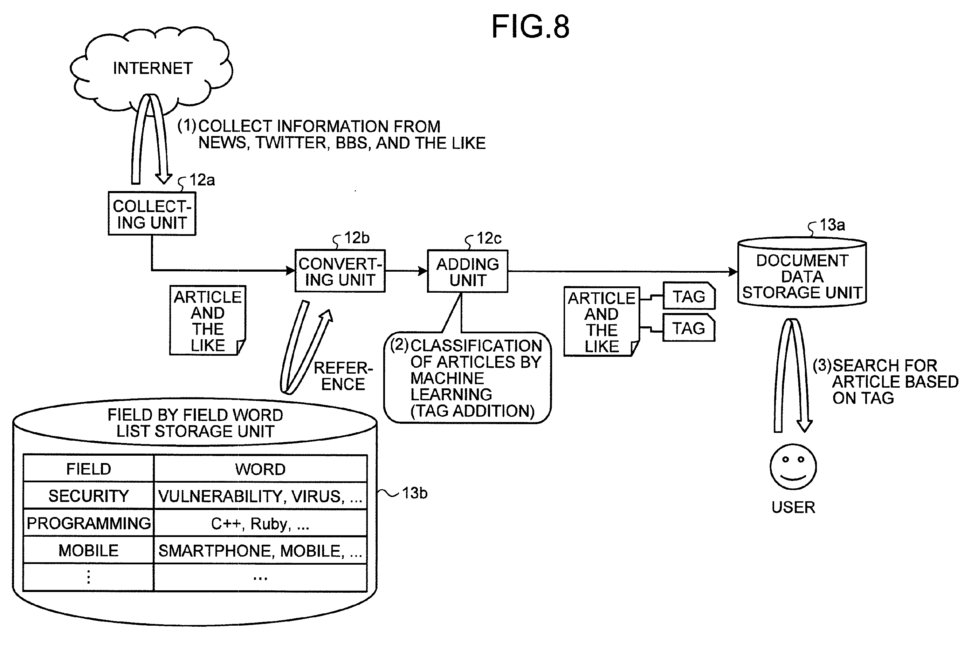

By use of FIG. 8, a series of processes for the information management device 10A to add tags to collected articles and execute a search based on the tags will be described. FIG. 8 is a diagram illustrating a series of processes for adding, with reference to a field by field word list, tags to articles, and executing a search based on the tags, in the information management device according to the second embodiment. As illustrated in FIG. 8, the collecting unit 12a of the information management device 10A collects information, such as articles from news sites, Twitter, BBSs, and the like on the Internet (see (1) in FIG. 8).

The converting unit 12b then refers to the word list stored in the field by field word list storage unit 13b, extracts words from each set of document data, and based on the words, converts the set of document data into a feature vector. Thereafter, the adding unit 12c provides the feature vectors converted by the converting unit 12b to the machine learning engine, the feature vectors are classified into categories that have been provided in advance, and tags corresponding to the categories are added to the articles and the like (see (2) in FIG. 8). The searching unit 12e then searches for document data added with tag information corresponding to a field specified by a user (see (8) in FIG. 3).

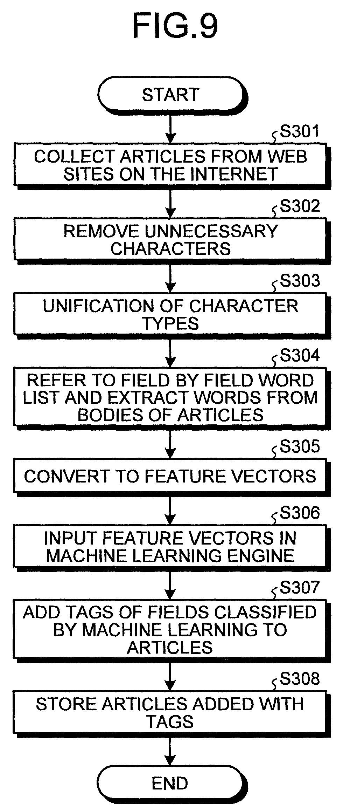

Next, by use of FIG. 9, a process by the information management device 10A according to the second embodiment will be described. FIG. 9 is a flow chart illustrating a flow of a tag addition process in the information management device according to the second embodiment.

As illustrated in FIG. 9, the collecting unit 12a of the information management device 10A collects articles from Web sites (news sites, BBSs, Twitter, blogs, and the like) on the Internet (Step S301). The converting unit 12b then removes unnecessary characters from the collected articles (Step S302). For example, the converting unit 12b deletes, as the removal of unnecessary characters, extra space and URLs and the like that hinder language processing, from the article data.

Subsequently, the converting unit 12b unifies character types of the collected articles (Step S303). For example, the converting unit 12b unifies, as the unification of character types, upper case letters and lower case letters, or so-called ens and ems, with respect to characters used in the article data.

The converting unit 12b refers to the field by field word list, and extracts words included in the list of each field from a body of an article (Step S304). Feature vector conversion for provision to the machine learning engine is then executed (Step S305). For example, as to the conversion to a feature vector, the converting unit 12b divides the article by use of: the extracted words as they are; morphological analysis; n-gram; and a delimiter character, to execute the conversion to a feature vector.

Subsequently, the adding unit 12c provides the feature vectors converted by the converting unit 12b to the machine learning engine, and the feature vectors are classified into categories that have been provided in advance (Step S306). The adding unit 12c then adds the tags of the categories classified by the machine learning, to the article data (Step S307). Thereafter, the adding unit 12c stores the collected articles and the categories added thereto, into the document data storage unit 13a (Step S308).

As described above, in the information management device 10A according to the second embodiment, a word list related to predetermined fields is stored. The information management device 10A then extracts, with reference to the word list, words from each set of document data, and based on the words, converts the set of document data into a feature vector. Therefore, upon the conversion into a feature vector, by the use of the words of the word list, classification more specific to a field is possible.

### [Third Embodiment]

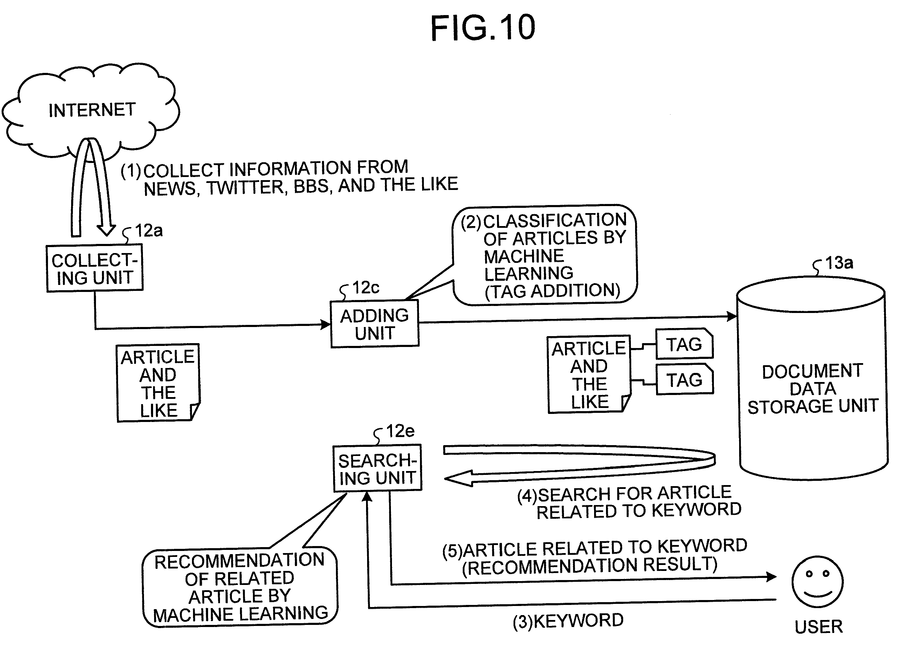

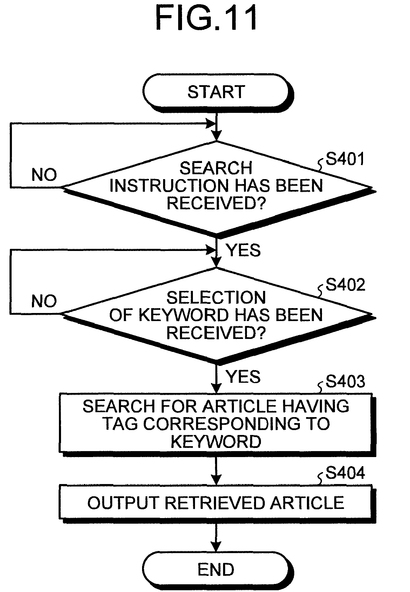

In a third embodiment, an information management device may receive, as a specification of a field of document data subject to search, an input of a keyword related to the field, and search for document data added with tag information corresponding to the received keyword. Thus, hereinafter, by use of FIG. 10 and FIG. 11, a case where a search for articles related to a keyword is executed and similar articles are output will be described. Description of any configuration and process common with the first embodiment will be omitted.

First, by use of FIG. 10, a series of processes for adding tags to articles and executing a search for an article related to a keyword, in an information management device 10B according to a third embodiment will be described. FIG. 10 is a diagram illustrating the series of processes for adding tags to articles and executing a search for an article related to a keyword, in the information management device according to the third embodiment.

As illustrated in FIG. 10, the collecting unit 12a of the information management device 10B collects information, such as articles from news sites, Twitter, BBSs, and the like on the Internet (see (1) in FIG. 10).

The adding unit 12c then provides feature vectors converted by the converting unit 12b to the machine learning engine to classify the feature vectors into categories that have been provided in advance, and adds tags corresponding to the categories to the articles and the like (see (2) in FIG. 10). The receiving unit 12d then receives an input of a keyword from a user (see (3) in FIG. 10).

Subsequently, the searching unit 12e searches for an article added with a tag corresponding to the keyword (see (4) in FIG. 10). For example, if "vulnerability" has been provided as the keyword, an article added with a tag, "security", corresponding to "vulnerability" is searched for. The searching unit 12e then outputs the article related to the keyword to the user, with a result of the search being a recommendation result (see (5) in FIG. 10).

Next, by use of FIG. 11, a process by the information management device 10B according to the third embodiment will be described. FIG. 11 is a flow chart illustrating a flow of an information search process in the information management device according to the third embodiment.

As illustrated in FIG. 11, if a search instruction to start a search is received (Step S401: Yes), the receiving unit 12d of the information management device 10B determines whether or not an input of a keyword has been received (Step S402). If the receiving unit 12d has received the input of a keyword (Step S402: Yes), an article having a tag corresponding to the keyword is searched for (Step S403). For example, if "vulnerability" has been provided as the keyword, an article, which has been added with a tag, "security", corresponding to "vulnerability", is retrieved. The searching unit 12e then outputs the retrieved article (Step S404).

As described above, in the information management device 10B according to the third embodiment, as a specification of a field of document data to be searched, an input of a keyword related to the field is received, and document data added with tag information corresponding to the received keyword are searched. Accordingly, the information management device 10B is able to retrieve document data appropriately, based on a keyword input by a user.

### [System Configuration and the like]

Further, each component of the respective devices is functionally and conceptionally illustrated, and is not necessarily physically configured as illustrated in the drawings. That is, specific modes of distribution and integration of the respective devices are not limited to those illustrated in the drawings, and depending on various loads and use situations, all or some of the devices may be configured to be functionally or physically distributed or integrated in arbitrary units. For example, the converting unit 12b and the adding unit 12c may be integrated with each other. Further, all or any part of the processing functions executed by the respective devices may be realized by a CPU and a program analyzed and executed by the CPU, or may be implemented as hardware by wired logic.

Further, of the respective processes described in the embodiments, all or a part of the processes described as being executed automatically may be executed manually, or all or a part of the processes described as being executed manually may be executed automatically by a known method. In addition, the procedural sequences, control sequences, specific names, and information including various data and parameters described above and illustrated in the drawings may be arbitrarily modified unless otherwise particularly stated.

### [Program]

Further, a program, which describes the process executed by the information management device 10 described in the above embodiment in a language executable by a computer, may be generated. For example, an information management program, which describes the process executed by the information management device 10 according to the first embodiment in a language executable by a computer, may be generated. In this case, by the computer executing the information management program, effects that are the same as those of the above embodiment are able to be obtained. Further, by recording that information management program in a computer readable recording medium and causing the computer to load the information management program recorded in this recording medium for execution, processing that is the same as that of the first embodiment may be realized. Hereinafter, an example of a computer that executes an information management program realizing functions that are the same as those of the information management device 10 illustrated in FIG. 1 will be described.

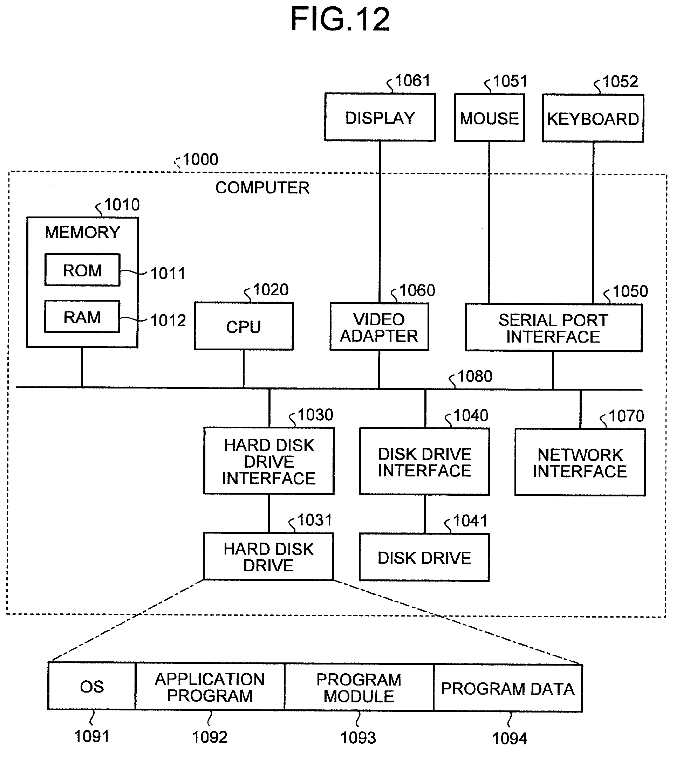

FIG. 12 is a diagram illustrating a computer 1000 that executes the information management program. As exemplified in FIG. 12, the computer 1000 has, for example, a memory 1010, a CPU 1020, a hard disk drive interface 1030, a disk drive interface 1040, a serial port interface 1050, a video adapter 1060, and a network interface 1070, and these respective units are connected to one another by a bus 1080.

The memory 1010 includes, as exemplified in FIG. 12, a read only memory (ROM) 1011, and a RAM 1012. The ROM 1011 stores therein a boot program, such as a basic input output system (BIOS), for example. The hard disk drive interface 1030 is, as exemplified in FIG. 12, connected to a hard disk drive 1031. The disk drive interface 1040 is, as exemplified in FIG. 12, connected to a disk drive 1041. An attachable and detachable storage medium, such as a magnetic disk or an optical disk, for example, is inserted into the disk drive 1041. The serial port interface 1050 is, as exemplified in FIG. 12, connected to, for example, a mouse 1051 and a keyboard 1052. The video adapter 1060 is, as exemplified in FIG. 12, connected to, for example, a display 1061.

As exemplified in FIG. 12, the hard disk drive 1031 stores therein, for example, an OS 1091, an application program 1092, a program module 1093, and program data 1094. That is, the above described information management program is stored, as a program module, in which commands executed by the computer 1000 are described, in the hard disk drive 1031, for example.

Further, the various data described in the above embodiment are stored, as program data, in, for example, the memory 1010, or the hard disk drive 1031. The CPU 1020 reads, as necessary, the program module 1093 and program data 1094 stored in the memory 1010 or hard disk drive 1031 out to the RAM 1012, and executes various procedures.

The program module 1093 and the program data 1094 related to the information management program are not necessarily stored in the hard disk drive 1031, and may be stored in, for example, an attachable and detachable recording medium and read out by the CPU 1020 via the disk drive or the like. Or, the program module 1093 or program data 1094 related to the information management program may be stored in another computer connected via a network (local area network (LAN), wide area network (WAN), or the like) and read out by the CPU 1020 via the network interface 1070.

### Reference Signs List

- 10, 10A, 10B: INFORMATION MANAGEMENT DEVICE
- 11: COMMUNICATION PROCESSING UNIT
- 12: FUNCTIONAL UNIT
- 12a: COLLECTING UNIT
- 12b: CONVERTING UNIT
- 12c: ADDING UNIT
- 12d: RECEIVING UNIT
- 12e: SEARCHING UNIT
- 13: STORAGE UNIT
- 13a: DOCUMENT DATA STORAGE UNIT
- 13b: FIELD BY FIELD WORD LIST STORAGE UNIT
- 14: CONTROL UNIT

## Claims

1. An information management device, comprising:
a collecting unit that collects plural sets of document data on a network;
an adding unit that classifies the respective sets of document data into predetermined fields by use of words included in the respective sets of document data that have been collected by the collecting unit, and adds tag information corresponding to the fields respectively to the sets of document data;
a receiving unit that receives a specification of a field of document data to be searched; and
a searching unit that searches for document data added with tag information corresponding to the field received by the receiving unit.

2. The information management device according to claim 1, further comprising a converting unit that converts, based on the words included in the respective sets of document data collected by the collecting unit, the sets of document data into feature vectors, wherein
the adding unit classifies, by use of the feature vectors converted by the converting unit, the respective sets of document data into the predetermined fields and adds the tag information corresponding to the fields respectively to the sets of document data.

3. The information management device according to claim 2, further comprising a storage unit that stores therein a word list related to the predetermined fields, wherein
the converting unit extracts, with reference to the word list stored in the storage unit, extracts words from the respective sets of document data, and based on the words, converts the sets of document data into feature vectors.

4. The information management device according to any one of claims 1 to 3, wherein the receiving unit displays field candidates for document data to be searched, and receives a specification of a field from the displayed field candidates.

5. The information management device according to any one of claims 1 to 3, wherein
the receiving unit receives, as the specification of a field of document data to be searched, an input of a keyword related to the field, and
the searching unit searches for document data added with tag information corresponding to the keyword received by the receiving unit.

6. An information management method executed by an information management device, the information management method including:
a collecting step of collecting plural sets of document data on a network;
an adding step of classifying the respective sets of document data into predetermined fields by use of words included in the respective sets of document data that have been collected by the collecting step, and adding tag information corresponding to the fields respectively to the sets of document data;
a receiving step of receiving a specification of a field of document data to be searched; and
a searching step of searching for document data added with tag information corresponding to the field received by the receiving step.
